# EUROPEAN PATENT APPLICATION

(11) **EP 3 584 548 A1**
(43) Date of publication of application: **25.12.2019**
(21) Application number: 18754600.7
(22) Date of filing: 16.02.2018
(51) Int. Cl.: G01H 17/00, H04R 29/00

(54) **DEVICE FOR MONITORING ENVIRONMENTAL NOISE BY MEANS OF MOVABLE VOLUMETRIC MEASURING INSTRUMENTS**

(30) Priority: 16.02.2017 ES 201700116 U
(71) Applicant: Aragüez Del Corral, Inés, 29700 Velez-Málaga (ES)
(72) Inventor: Aragüez Del Corral, Inés, 29700 Velez-Málaga (ES)
(74) Representative: ZBM Patents - Zea, Barlocci & Markvardsen
(86) International application number: PCT/ES2018/000014
(87) International publication number: WO 2018/150065

(57) **Abstract**

The invention relates to a device for monitoring environmental noise by means of movable volumetric measuring instruments, characterised in that it forms a device for measuring noise by means of an acoustic measuring instrument with multiple microphones, installed on a movable carrying system. The device incorporates: a data input unit that allows the signals to be processed for conversion into a format that allows the subsequent computer processing of same; one or more units of elements for receiving, managing and storing data; and an output unit for sending the obtained files to a computer or other computer device for post-processing by means of software. The device also comprises elements for actuation and control.

## Description

### Technical field

The present invention belongs to the field of industrial engineering, and more specifically to the field of acoustic engineering.

The object of the present invention is a new device for monitoring environmental noise by means of the use of multiple measuring instruments which generate a three-dimensional image with information on acoustic levels within a volume defined by the measurement range thereof.

### Background of the invention

The environment, in general, and in particular, the urban environment, are subject to high acoustic stress caused by the impact of traffic noise, public works, cleaning and waste collection jobs and, above all, hotel and leisure activities performed outdoors.

It is well-documented in scientific literature how unhealthy this acoustic contamination is and there is a need to know and to be able to sample the numerical values of said contamination. The government controls and limits the emission values of the different emitting elements as well as those of acoustic emission in public roads, homes and public and private establishments.

The collection of acoustic values has traditionally been carried out through the use of fixed sound level meters equipped with a single sensor microphone which obtains a series of values in a range of frequencies and the data of which can be subjected to statistical post-processing. Lately, other types of devices are appearing on the market which are equipped with multiple sensor microphones, enabling a three-dimensional image of acoustic measurements to be obtained without needing to move the device. These measurements, as in the previous case, can capture intensities within frequencies and be subjected to statistical post-processing.

No references have been found of the existence of a system and/or data processing similar to that which is described in the present invention. A non-exhaustive search of related or similar inventions was performed with which this document is filed and no matches or similarities were found of the assembly or of the details. The following filings were considered:
1. AUTONOMOUS DEVICE FOR CONTROLLING PHYSICAL, CHEMICAL AND/OR BIOLOGICAL ENVIRONMENTAL CONSTANTS. Publication number ES1Q47791 U (16.05.2001) also published as: ES1047791 Y (01.10.2001)
2. METHOD AND SYSTEM FOR ESTIMATING ROAD TRAFFIC FLOWS IN ACCORDANCE WITH ENVIRONMENTAL NOISE LEVELS Publication number ES2391860 A1 (30.11.2012) also published as ES2391860 B2 (26.04.2013)
3. DEVICE FOR URBAN ENVIRONMENTAL MANAGEMENT AND CONTROL. Publication number ES1064187 U (16.02.2007), also published as ES 1064187 Y (16.05.2007)
4. EQUIPMENT FOR MEASURING ENVIRONMENTAL NOISE Publication number ES2384QS9 A1 (29.06.2012), also published as: ES2384059 B1 (08.05.2013)
5. METHOD AND SYSTEM FOR ESTIMATING ROAD TRAFFIC FLOWS IN ACCORDANCE WITH ENVIRONMENTAL NOISE LEVELS Number 10 publication PCT/ES2013/070555 (30.07.2013) also published as: WO2014020213 A1 (06.02.2014)
6. CONTROLLER FOR LIMITING ENVIRONMENTAL NOISE Publication number: ES1008470 U (16.04.1989)
7. PROCEDURE FOR CONTROLLING ENVIRONMENTAL NOISE AND NOTIFICATIONS. Publication Number ES2532869 A1 (01.04.2015) also published as ES2532869 B1 (29.10.2015)
8. ENVIRONMENTAL NOISE DETECTOR Publication number ESG242624 U (16.06.1979), also published as ES0242624 Y (01.12.1979)

### Disclosure of the invention

The proposed invention consists of a device for monitoring environmental noise comprising an acoustic measuring instrument with multiple microphones installed in a movable carrying system for the equipment. The configuration of the microphones will be suitable for the space where the measurement is to be performed.

The device for monitoring environmental noise may also comprise, optionally, any other type of sensors of environmental parameters, such as any type of air pollutant, light measurements or other variables.

This device may optionally be equipped with a positioning equipment (GPS or any other type), which comprises the geodetic or geographical coordinates of the measurement, and/or a meteorological station, capable of measuring parameters such as environmental temperature, atmospheric pressure, humidity, wind speed and direction or any meteorological parameter of interest, and/or a clock. The invention will also have the option of coupling a video camera and/or photographic camera, such that the data cloud of collected acoustic data can be superimposed on the obtained video or photograph, and furthermore, optionally being able to add the location by means of geographic coordinates, weather data and/or exact date and time data of the measurement. It can also be optionally supplemented with the measurement data of the additional environmental parameter sensors as defined above.

The device for monitoring environmental noise thus formed will also comprise an electronic equipment to which all the signals coming from the different existing already-defined sensors will arrive and it will generate a structured data file wherein the value of acoustic measurements, time and other environmental parameters are associated with each three-dimensional coordinate. Furthermore, the obtained photograph or video's image will be associated with this formed data matrix .

This entire data cloud of collected data may be downloaded, in post-processing, into a computer or equivalent device wherein, and by means of appropriate software, all these values can be processed in order to obtain both graphical and numerical results.

This device for monitoring environmental noise enables evaluating the origin of the different emission points and the impact on the surrounding environment, besides many other parameters.

The proposed invention has the advantage of providing all the measurements that may be needed in order to evaluate the levels of acoustic emission and the impact on third parties. By means of the option to incorporate sensors for other environmental parameters, the system will even enable to make level, intensities or concentrations maps of different types of pollutants or other measured values. This way, a perfect tool is provided for civil applications, controlling activities, controlling emissions, controlling emissions generated by traffic, detecting regulatory non-compliance, counseling in case of complaints, and a long list that would get longer as time goes on and with possible new applications that could be incorporated. It can also be a very useful tool in the case of controlling noise emission or other environmental impacts in port facilities, airports, road infrastructures, industrial areas, large shopping centres, and even isolated events. The system may also be used as an element to determine the condition of road installations as they pass through environmentally protected spaces, such as parks and nature reserves and other areas with high acoustic or environmental sensitivity.

The device for monitoring environmental noise may preferably comprise a support for the positioning equipment, the weather station, other sensors and/or the camera or video camera, as well as the structure where the acoustic measuring instrument with multiple microphones is supported. Furthermore, it must have a central unit for receiving, managing and storing data.

The carrying system for transferring the equipment will be embodied based on the features of the area to be measured, being able to adopt, among others, the following configurations:
- BASIC SYSTEM. The different already-defined sensor elements may be fastened to a support structure, preferably a column, bar or similar support with the height necessary for a correct measurement, being able to have, in this case, the elements for receiving, managing and storing data preferably in a backpack, bag, trolley or any other element that is easily transportable, or even attached to the support structure itself. The connection between the different sensor elements and those for receiving, managing and storing data will preferably be made by means of a link cable or even wirelessly. This arrangement is ideal for those places where access with vehicles is not allowed. For example, pedestrian roads, forest or natural areas without roads adapted for vehicles, river and marine areas, etc. In this case, the carrying system can optionally be equipped with wheels in the base thereof for easy transport and stability. The element for actuating and controlling of the different sensor devices will be arranged in a place accessible to the user.
- MOVABLE TROLLEY. In this case, the entire device for monitoring environmental noise may be arranged on and adapted to a trolley with wheels and a handle, to which a vertical support structure is attached. The different sensor elements will be fastened to this support structure, which will preferably be a column, bar or similar support with the height necessary for correct measuring, and in this case the elements for receiving, managing and storing data being able to be preferably arranged inside the trolley or even attached to the support structure of the sensor elements. The connection between these sensor elements and those for receiving, managing and storing data will preferably be made by means of a link cable or even wirelessly. This arrangement is also ideal for those places where access with vehicles is not allowed, such as pedestrian roads. This trolley can be moved directly by the user or with the help of a small traction motor. The element for actuation and control of the different sensor elements may be arranged in a place accessible to the user.
- SYSTEM ADAPTED TO A GROUND VEHICLE. In this case, all the sensor elements will be arranged coupled to a vertical support structure located on the outside of the vehicle. This support structure will adapt to the vehicle by means of an accessory preferably secured to the roof, to the side or adapted to any of the windows or other elements on the outside of the vehicle. In any case, it must be solidly and firmly secured. The elements for receiving, managing and storing data will preferably be located inside of it or in another suitable space. The indicated vehicle could preferably be an adapted car, adapted tricycle, motorcycle, bicycle or other. Smaller vehicles have the advantage of being able to stop in order to perform the measurement without affecting existing traffic. The element for actuation and control of the different sensor elements may be arranged in a place accessible to the user.
- SYSTEM WITH REMOTE SENSOR ADAPTED TO A DRONE OR ANOTHER AERIAL VEHICLE. In many cases, due to traffic density or access difficulty, it may be easier to arrange the sensor elements preferably fastened to a drone or any other aerial vehicle with suitable power and size which may be what moves. The data would be wirelessly transmitted to the central unit, where the elements for receiving, managing and storing data are located, arranged in some other vehicle, person or installation or, if possible, coupled to the aerial vehicle. The element for actuating and controlling the different sensor devices may be arranged in a place accessible to the user.
- SYSTEM ON AN AQUATIC VEHICLE. In those cases when it is necessary to perform repeated measurements in river, swamp, or marine areas, etc. all the elements, both sensor and receiver elements, may be arranged in an aquatic vehicle. In this case, the support structure may be solidly fastened to the ship as a mast. The element for actuating and controlling of the different sensor devices may be arranged in a place accessible to the user.

### Brief description of the drawings

In order to complement the description being made and with the object of helping to better understand the features of the invention, according to a preferred practical exemplary embodiment thereof, said description is accompanied, as an integral part thereof, by a set of drawings where, in an illustrative and non-limiting manner, the following has been represented:
Figure 1 shows an example of the basic system arrangement, showing how the user uses a column-like support structure (4). In this case, the user transports the column to the measuring site, places it vertically at this point and performs all the measurements, the values of which are stored in the elements for receiving, managing and storing data (5). The figure shows how all the elements comprised in the device for monitoring environmental noise would be arranged, namely: photographic camera and/or video camera (3), antenna of the positioning equipment (2), acoustic measuring instrument with multiple microphones (1), sensors for environmental parameters (12), weather station (13), support structure (4), elements for receiving, managing and storing data (5), transmission system (14) when appropriate, and a link cable between the different sensor elements and those for receiving, managing and storing data (6).
Figure 2 shows an exemplary movable trolley arrangement, showing how the support structure (4) is connected to a movable trolley (7) which facilitates the transportation of all the elements and the location thereof at the measuring point. This movable trolley (7) is pushed by the user until it reaches the measuring site although it may optionally have a traction motor which facilitates the movement thereof. The elements making up the assembly are as follows: photographic camera and/or video camera (3), antenna of the positioning equipment (2), acoustic measuring instrument with multiple microphones (1), sensors for environmental parameters (12), weather station (13), support structure (4), elements for receiving, managing and storing data (5), transmission system (14) when appropriate, and movable trolley (7).
Figure 3 shows an example of the arrangement of the system adapted to a ground vehicle, showing how the support structure (4) is attached to a land vehicle (8). In this case, the support structure (4) is coupled to a car or any other vehicle. The user goes inside of it. The vehicle, in the trajectory thereof, starts to perform the corresponding measurements, thus, in those cases when these measurements are carried out in a road with surrounding traffic, the method and the speed of the data collection are facilitated. The elements making up the assembly are as follows: photographic camera and/or video camera (3), antenna of the positioning equipment (2), acoustic measuring instrument with multiple microphones (1), sensors for environmental parameters (12), weather station (13), support structure (4), elements for receiving, managing and storing data (5), transmission system (14) when appropriate, and ground vehicle (8).
Figure 4 shows an example of the arrangement of the system on an aquatic vehicle (11), showing how this vehicle, in the trajectory thereof, performs the corresponding measurements, thus, in those cases when it is necessary to perform measurements in navigable channels, river or coastal areas or even swamp or flooded areas, the method and the speed of the data collection are facilitated. The elements making up the assembly are as follows: photographic camera and/or video camera (3), antenna of the positioning equipment (2), acoustic measuring instrument with multiple microphones (1), sensors for environmental parameters (12), weather station (13), support structure (4), elements for receiving, managing and storing data (5), transmission system (14) when appropriate, and aquatic vehicle (11).
Figure 5 shows an example of a system arrangement with a remote sensor adapted to a drone (10) or another aerial vehicle, showing how this drone (10), in the aerial trajectory thereof, performs the corresponding measurements. In this manner, in those cases when it is necessary to perform measurements which, due to the inaccessibility of the land, due to the large area to be covered in the measurement or for greater ease, this aerial method is necessary. In this case, the user controls the drone (10) by means of a drone motion controller (9) from the surface of the ground, and further has a backpack wherein the elements for receiving, managing and storing data (5) are located. The reception of the signals is performed wirelessly. The elements comprised in the assembly are as follows: photographic camera and/or video camera (3), antenna of the positioning equipment (2), acoustic measuring instrument with multiple microphones (1), sensors for environmental parameters (12), weather station (13), support structure (4), elements for receiving, managing and storing data (5), transmission system (14), drone motion controller (9) and drone (10).

### Preferred embodiment of the invention

The proposed invention consists of a device for monitoring environmental noise comprising an acoustic measuring instrument with multiple microphones (1) installed in a carrying system for moving the equipment.

This device will be equipped with GPS positioning equipment comprising the geodetic coordinates of the measurement, a weather station (13), a precision clock and support for the possible installation of other sensors for environmental parameters (12). The invention also comprises a photographic camera and a video camera (3), such that the data cloud of collected acoustic data can be superimposed on the obtained photograph or the video data, and furthermore, optionally adding the location by means of GPS coordinates, and the exact date and time data of the measurement.

In post-processing, and through suitable software, all the data obtained may be processed such that it could be converted into a map with colour intensities proportional to the measured values or, when appropriate, maps of level curves. Furthermore, the necessary numerical listings could be obtained.

The proposed system has the advantage of providing all the measurements that may be needed in order to evaluate the levels of acoustic emission and the impact on third parties. In this manner, a perfect tool is achieved for civil applications, controlling activities, controlling traffic, detecting regulatory non-compliance, counseling in case of complaints, and a long list that would get longer as time goes on and with possible new applications that could be incorporated. It may also be a very useful tool in the case of controlling noise emission in port facilities, airports, road infrastructures, industrial areas, large shopping centres, and even isolated events. The system may also be used as an element to determine the condition of road installations as they pass through environmentally protected spaces, such as parks and nature reserves and other areas with high acoustic sensitivity.

The device for monitoring environmental noise should comprise a support structure (4) for the antenna of the GPS positioning equipment (2), the weather station (13), the photographic camera and the video camera (3) and other possible sensors for environmental and light parameters (12), as well as the structure where the acoustic measuring instrument with multiple microphones (1) is fastened. Furthermore, it must have a central unit with the elements for receiving, managing and storing data (5).

The configuration of the device for transporting and supporting the unit and the sensors will be carried out based on the features of the area to be measured, being able to adopt, among others, the following configurations:
- BASIC SYSTEM. The different already-defined sensor elements are fastened to a support structure (4) in the shape of a bar, and in this case the elements for receiving, managing and storing data (5) may be arranged in a backpack carried by the user. The connection between the different sensor elements and the ones for receiving, managing and storing data (5) is made by means of a link cable (6). This arrangement is ideal for those places where access with vehicles is not allowed. For example, pedestrian roads, forest or natural areas without roads adapted for vehicles, river and marine areas, etc. The element for actuating and controlling of the different sensor devices is arranged in a place accessible to the user.
- MOVABLE TROLLEY. In this case, the entire device for monitoring environmental noise is arranged and adapted to a movable trolley (7) with wheels and a handle, to which a vertical support structure (4) is attached. The different sensor elements are fastened to this support structure (4) which is a bar, the elements for receiving, managing and storing data (5) being able to be arranged inside the trolley or even attached to the support structure itself of the sensor elements. The connection between these sensor elements and those for receiving, managing and storing data is made by means of a link cable (6). This arrangement is also ideal for those places where access with vehicles is not allowed, such as pedestrian roads. This trolley is moved directly by the user. The element for actuation and control of the different sensor elements is arranged in a place accessible to the user.
- SYSTEM ADAPTED TO A GROUND VEHICLE. In this case, all the sensor elements are arranged coupled to a vertical support structure (4) located on the outside of a car. This support structure (4) is adapted to the land vehicle (8) itself by means of an accessory which uses the roof bar system of the vehicle. In any case, this securing must be solid and firm. The elements for receiving, managing and storing data (5) are located inside the vehicle. The element for actuation and control of the different sensor elements is arranged in a place accessible to the user.
- SYSTEM WITH REMOTE SENSOR ADAPTED TO A DRONE OR ANOTHER AERIAL VEHICLE. In many cases, due to traffic density or access difficulty, it is easier to arrange the sensor elements fastened to a drone (10) and this is what moves. The data would be transmitted to the central unit, where the elements for receiving, managing and storing data are located (5), arranged in a backpack carried by the user, the data being transmitted wirelessly. The element for actuating and controlling of the different sensor devices is arranged in a place accessible to the user.
- SYSTEM ON AN AQUATIC VEHICLE. In those cases when it is necessary to perform repeated measurements in river, swamp, maritime areas, etc. all the elements (antenna of GPS positioning equipment (2), photographic camera and video camera (3), acoustic measuring instrument with multiple microphones (1), elements for receiving, managing and storing data (5), etc.) may be arranged in an aquatic vehicle. In this case, the support structure (4) is solidly fastened to the ship as a mast. The element for actuating and controlling of the different sensor devices is arranged in a place accessible to the user.

## Claims

1. A device for monitoring environmental noise by means of movable volumetric measuring instruments, **characterised in that** it comprises a noise measuring device 5 comprising an acoustic measuring instrument comprising multiple microphones (1), installed on a movable carrying system. The device further comprising a data input unit that allows the signals to be processed for conversion into a format that allows the subsequent computer processing of same; one or more units of elements for receiving, managing and storing data (5); and an output unit for sending the obtained files to a computer device for post-processing by means of software. The device also comprises elements for actuation and control.

2. The device for monitoring environmental noise by means of movable volumetric measuring instruments according to claim 1 **characterised in that** it further comprises a global positioning system.

3. The device for monitoring environmental noise by means of movable volumetric measuring instruments according to claim 1 **characterised in that** it further comprises a photographic camera.

4. The device for monitoring environmental noise by means of movable volumetric measuring instruments according to claim 1 **characterised in that** it further comprises a video camera.

5. The device for monitoring environmental noise by means of movable volumetric measuring instruments according to claim 1 **characterised** for in that it further comprises a clock.

6. The device for monitoring environmental noise by means of movable volumetric measuring instruments according to claim 1 **characterised in that** it further comprises a weather station (13).

7. The device for monitoring environmental noise by means of movable volumetric measuring instruments according to claim 1 **characterised in that** it further comprises sensors for environmental parameters (12).

8. The device for monitoring environmental noise by means of movable volumetric measuring instruments according to claim 1 or 2 or 3 or 4 or 5 or 6 or 7 **characterised in that** it is installed in the upper portion of a vertical support structure (4).

9. The device for monitoring environmental noise by means of movable volumetric measuring instruments according to claims 1 and 8 **characterised in that** the elements for receiving, managing and storing data (5) are arranged attached to the vertical support structure (4).

10. The device for monitoring environmental noise by means of movable volumetric measuring instruments according to claims 1 and 8 **characterised in that** the elements for receiving, managing and storing data (5) are arranged in a wallet or backpack able to be carried by the user.

11. The device for monitoring environmental noise by means of movable volumetric measuring instruments according to claims 1 and 8 **characterised in that** it has wheels at the base of the support structure (4).

12. The device for monitoring environmental noise by means of movable volumetric measuring instruments according to claim 1 or 2 or 3 or 4 or 5 or 6 or 7 **characterised in that** it comprises a vertical support structure (4) attached to a movable trolley (7) comprising wheels.

13. The device for monitoring environmental noise by means of movable volumetric measuring instruments according to claims 1 and 12 **characterised in that** it further comprises a traction motor in the wheels of the movable trolley (7).

14. The device for monitoring environmental noise by means of movable volumetric measuring instruments according to claim 1 or 2 or 3 or 4 or 5 or 6 or 7 **characterised in that** it comprises a vertical support structure (4) which is coupled to a ground vehicle (8) by means of a securing device. The elements for receiving, managing and storing data (5) are comprised in the ground vehicle (8).

15. The device for monitoring environmental noise by means of movable volumetric measuring instruments according to claim 1 or 2 or 3 or 4 or 5 or 8 or 7 **characterised in that** it comprises a support structure (4) which is coupled to an aquatic vehicle (11) by means of a securing device.

16. The device for monitoring environmental noise by means of movable volumetric measuring instruments according to claim 1 or 2 or 3 or 4 or 5 or 6 or 7 **characterised in that** it comprises a support structure (4) which is coupled to an aerial vehicle by means of a securing device.
